# EUROPEAN PATENT SPECIFICATION

(11) **EP 2 622 280 B1**
(45) Date of publication and mention of the grant of the patent: **03.06.2015**
(21) Application number: 11782681.8
(22) Date of filing: 29.09.2011
(51) Int. Cl.: F24F 13/30, B01D 53/26, B01D 53/28, F25D 17/06, F24F 13/14, B01D 53/14, F28F 13/00, F24F 5/00, F28D 21/00, F24F 3/14

(54) **CONTACTOR MODULE WITH HYDROPHOBIC CAPILLARY MEMBRANES, INTEGRATED IN A HEAT EXCHANGER AND HYBRID PLANT FOR THE DEHUMIDIFICATION/CONDITIONING OF AIR**
IN EINEN WÄRMETAUSCHER INTEGRIERTES KONTAKTORMODUL MIT WASSERABWEISENDEN KAPILLARMEMBRANEN UND HYBRIDANLAGE ZUR ENTFEUCHTUNG/KONDITIONIERUNG VON LUFT
MODULE CONTACTEUR AVEC MEMBRANES CAPILLAIRES HYDROPHOBES INTÉGRÉ DANS UN ÉCHANGEUR DE CHALEUR ET UNITÉ HYBRIDE POUR LA DÉSHUMIDIFICATION ET/OU LA CLIMATISATION DE L'AIR

(30) Priority: 30.09.2010 IT RM20100508
(43) Date of publication of application: 07.08.2013
(73) Proprietor: Universita' degli Studi di Genova, 16126 Genova (IT)
(72) Inventor: ISETTI, Carlo, I-16126 Genova (IT); NANNEI, Enrico, I-16126 Genova (IT); CAPANNELLI, Gustavo, I-16126 Genova (IT); BOTTINO, Aldo, I-16126 Genova (IT)
(74) Representative: Perronace, Andrea
(86) International application number: PCT/IT2011/000335
(87) International publication number: WO 2012/042553

(56) References cited:
- EP-A2- 0 678 321
- WO-A1-02/44624
- DE-A1- 19 545 335
- US-A1- 2002 078 696

## Description

The present invention concerns a contact module with hydrophobic capillary membranes integrated in a heat exchanger, and hybrid plant for the air dehumidification/conditioning.

More in detail, the contact module (CMC, combined membrane contactor) that constitutes the core of the invention allows to simplify the architecture of such type of plants that combine vapor compression cycles (refrigerator) with liquid desiccant (hybrid plants) simultaneously improving the energetic efficiency. Indeed the whole circuit of such type of plants can be now integrated in an only CMC component (dehumidification and/or regeneration contactor). In this module one performs the following thermal and mass exchanges: considerable thermal exchange between the coolant and desiccant through metallic surfaces, thermal and mass exchanges between the desiccant and process air through the walls of the capillaries. In the CMC component the mentioned three fluids are present simultaneously. The invention further concerns a hybrid plant equipped with such components, which allow large energetic savings in important processes of air dehumidification and conditioning.

As it is known, during summer the air to be introduced into the conditioned interiors has to be cooled and dehumidified. Traditionally, the dehumidification is obtained by cooling down the air below its dew temperature. The compressor of the refrigerating cycle needs a considerable quantity of electrical/mechanical energy, particularly with large latent loads (that are typical of hot and humid climates and/or deriving from extensive productions of vapor within conditioned interiors). Often, further energy is to be supplied, in order to effect the post-heating of the process air to the end of a suitable control of the internal hygrometric conditions.

As it is well known, the dehumidification of air can be realized also by way of chemistry, using solid or liquid desiccant substances. Such a method can be advantageous owing to the fact that it allows the control of the specific humidity independently from the temperature. It follows that it is possible to obtain significant energetic savings with respect to the traditional dehumidification process, particularly in presence of high latent loads or when one disposes "free of charge" thermal energy to regenerate the desiccant solution. Such substances are mainly utilized in the industrial domain for the dehumidification of air in devices that provides for the air-desiccant solution direct contact, both in the absorption and in the regeneration phase.

Accordingly, in the important sector of the (industrial and civil) air treatments for the dehumidification and conditioning, besides the traditional vapor-compression refrigeration cycles, also plants are getting more and more used, which use hygroscopic solutions (liquid desiccants) such as, for example, aqueous solutions of LiCl, CaCl₂, LiBr, TEG.

In running functioning conditions, obviously, one requires a continuous regeneration of the desiccant solution to remove the absorbed water, which would gradually dilute the desiccant solution, thus weakening the dehumidification action.

Usually the regeneration is performed by the thermal way both by making boiling the desiccant at atmospheric pressure and by using various air-solution direct contact systems. In the first case, in order to realize an effective re generation, it is necessary to dispose of a thermal energy at temperatures higher than 130-140 °C. In the second case the following inconveniences appear:
(a) remarkable overall dimensions of the re generation systems, since it comprises, besides the real regenerator, supply and return conduits for the regeneration air and a ventilator for the moving thereof;
(b) dragging of desiccant droplets in the air as treated by the dehumidifier with consequent erosion of the conduits;
(c) reduced possibilities of variation, in the dehumidifier, of the air and desiccant flow rate independently;
(d) progressive atmospheric particulate pollution of the solution.

Moreover, such systems turn out to be of very problematic use on transport means that are subject to accelerations/decelerations.

In the technical literature air conditioning plants are known as well, which integrate direct-contact dehumidification systems and vapor-compression refrigeration cycles. In such systems, so-called hybrids, the chiller can operate at an evaporation temperature higher than that of a traditional plant with high coefficients of performance (COP). The regeneration is effected by exploiting the thermal energy given to the condenser of the refrigeration cycle and therefore these plants need not further thermal energy. The overall energy saving with respect to the traditional plants of air conditioning utilizing refrigeration cycles can reach 30-35 % with further improvements in the case of high latent loads. Obviously also the hybrid direct-contact plants share the above-recalled drawbacks.

A first solution to these technical problems is given by the subject-matter of the patent application No. RM2009A000672 with title "Integrated air conditioning and dehumidification plant" filed by Università di Genova on December 20, 2009, and herewith included by reference. It relates to plants using membrane contactors (air/desiccant) for the dehumidification of air, while for the re generation of the desiccant the patent application proposed the use of membrane distillation techniques. More in detail, in the evaporator of the refrigeration cycle, one subtracts thermal energy to the desiccant solution which, once chilled, is introduced in the real membrane dehumidifier contactor, wherein the heat and vapor exchange with air occurs. It is to be noted that in this dehumidification circuit, which is part of the plant, the evaporator and membrane contactor are two distinct components. A second circuit (regeneration) operating with membrane distillation techniques and connected in parallel with the first one (dehumidification) provides for the realization of suitable solution exchanges with the dehumidification circuit, to the end of transfer the absorbed water to the outside. The moving of the desiccant solution in the mentioned circuits is obtained by means of circulating pumps (circulators).

Some patents concerning air-solution direct-contact plants are also known which are property of DryKor (WO 99/26025; WO 99/26026/; WO 00/55546) and other ones that use membrane contactors (GVS of Bologna: Italian patent No. 01268171, granted in February 21, 1997, Italian patent No. 01268172, granted on February 21, 1997, US patent No. 5.528.905, granted on June 25, 1996, European patent EP 0 678 321 A3, which discloses the preamble of claim 1, granted on March 3, 1995, Italian patent No. 0001328299 granted on August 8, 2005, US patent No. 6.887.303 granted on May 3, 2005).

The analysis of the most recent technical literature on the application of the liquid desiccant (see the bibliography at the end of this description) highlights the following:
- and increasing interest in these problems in the scientific community as testified by the growing number of published technical;
- the research is oriented to eliminate/reduce the phenomena of dragging of absorbent solution droplets in the plants having direct-contact dehumidification contactors (the aqueous solutions of LiCl, CaCl₂ are highly corrosive for almost all the metals of technical interest); this objective is today pursued by reducing the speed of process air lapping the solution;
- another aim of the research is the reduction of the power used by the circulators; to this end, the desiccant flow rate in the circuits of dehumidification/re generation is reduced, so that one has larger variations of the solution concentration between entry and exit points of the dehumidification/regeneration components; to avoid that such variations exceedingly reduce the mass transport potential of the solution, it becomes necessary to control the solution temperature inside the components by suitable internal heat exchanges both in the dehumidification and regeneration contactor; the thermal exchanges inside the contactors are realized by adding a circulation system of coolant/heating fluids (hot/cold water, air cooled down by free-cooling techniques, etc.).

However, mostly in the case of hybrid plants, the resulting plant architectures are complex, presenting various different circuits and pumps (circulators) for moving the solution through such circuits.

It is object of the present invention to provide a CMC membrane contactor that solves the above mentioned problems and overcomes the drawbacks of the prior art, and that in particular allows to substitute the whole dehumidification/cooling circuit by an only component or even, as the case may be, the whole regeneration circuit by another CMC component.

The moving of the solution between the two components (dehumidification/cooling and regeneration) can be obtained by natural circulation or at most by an only circulator.

According to the known art, the dehumidification/cooling circuit of a hybrid plant comprises: membrane contactor, refrigerator evaporator, reservoir, dehumidification circuit and circulator.

It is subject matter of the present invention a contact module operating with three fluids, air, coolant fluid and desiccant solution, with hydrophobic tubular membranes for the dehumidification and/or cooling of process air, said contact module comprising a plurality of conduits for the coolant fluid, in particular typically frigorific evaporating fluid, the contact module being characterized in that:
- the space between said plurality of conduits is substantially filled with a plurality capillary pipes in hydrophobic micro-porous membrane, having cross-section of any geometry and being apt to contrast the external pressure of the liquid phase so as to maintain the section's shape, whose lumen is suitable to be crossed by air, and whose main extension direction is perpendicular to said plurality of conduits;
- on the two opposite surfaces of the contact module at the ends of said plurality of capillary pipes, one or more closing material layers, in particular of hardening resin, are disposed, for incorporating the end parts of said plurality of capillary pipes and sealing the thus created space between said plurality of capillary pipes, said space being suitable to let a desiccant solution pass which laps the external surface of said plurality of capillary pipes without being able to penetrate in their interior owing to the hydrophobic nature of their material, said two opposite surfaces having been subjected to cutting mechanical operations to the end of opening the lumen of said plurality of capillary pipes making thus possible the passage of the air to be dehumidified and/or cooled;
- on the opposite surfaces at the ends of said plurality of conduits respective collectors are arranged for the collection of the coolant fluid and the desiccant solution.

Preferably according to the invention, said plurality of capillary pipes have a diameter comprised between 0.4 and 6 mm.

Preferably according to the invention, said diameter is comprised between 0.8 and 3 mm.

Preferably according to the invention, on the sides of said plurality of conduits facing with each other, more fins are fixed, which are preferably metallic fins, in substantially perpendicular way with respect to the same sides, said fins extending only partially between said sides of plurality of conduits facing with each other, said fins being fixed in an alternate way on said sides facing with each other.

Preferably according to the invention, only the space between some of said plurality of conduits is used for the insertion of said plurality of capillary pipes whilst the space that is not used to that end is provided with traditional heat exchange fins to increase the thermal exchange with the air, thus operating in this last part as a traditional heat exchanger, in particular evaporation and/or condensation heat exchanger, the contact module being hence a CMCP module.

It is further specific subject-matter of the invention an integrated plant for the dehumidification and conditioning of air, comprising:
- a conditioning and/or dehumidification unit constituted by the contact module according to the subject-matter of the invention, for the dehumidification and cooling of the air by means of a desiccant solution,
- cooling means, connected to said conditioning and/or dehumidification unit, suitable to feed said conditioning and/or
dehumidification unit with the coolant fluid,
characterized in that:
- said conditioning and/or dehumidification unit is the contact module according to subject-matter of the invention;
- a regeneration unit for the regeneration of said a desiccant solution is comprised, which is connected to the conditioning and/or dehumidification unit;
- said regeneration unit is suitable to reconcentrate said desiccant solution that comes from the conditioning and/or dehumidification unit where it has been diluted by contact with humidity, discharging outside water and using for such a reconcentration process the condensation thermal energy of the coolant fluid, or the energy provided by another thermovector fluid, the reconcentrated desiccant solution being finally returned to said conditioning and/or dehumidification unit.

Preferably according to the invention, regeneration unit comprises a liquid/liquid membrane distillator of the type DCMD/AGMD or thermal recovery AGMD.

Preferably according to the invention, said regeneration unit is constituted by a further contact module according to the subject-matter of the invention.

Preferably according to the invention, when the contact module is the contact module according to the subject-matter of the invention:
- said refrigerating means feed further separate condensation coils and evaporation coils as well.

Preferably according to the invention:
- said conditioning and/or dehumidification unit dehumidifies a part of the air flow which is subsequently collected and mixed up with the non-dehumidified part so as to create an air mixture,
- said air mixture is cooled down with an exchange coil arranged in series on the air pathway, the exchange coil being fed with a part of the flow of coolant fluid coming from said cooling means;

- said regeneration unit operates in parallel with a condensing coil;
- the exchange of desiccant solution between said conditioning and/or dehumidification unit and said regeneration unit, to the end of regenerating the desiccant solution, is effected through suitable conduits.

Preferably according to the invention:
- the evaporation temperature of the frigorific fluid is the same in said conditioning and/or dehumidification unit and in said separate exchange coil;
- the condensation temperature of the frigorific fluid is the same in said regeneration unit and in said separate condensation coil.

Preferably according to the invention, when the contact module is the contact module according to the subject-matter of the invention:
- said cooling means do not comprise the evaporation coil external to the CMCP contact module,
wherein the space that is not occupied by said capillary pipes operates as a traditional refrigerating coil arranged in parallel.

Preferably according to the invention, when the contact module is the contact module subject-matter of the invention:
- said cooling means do not comprise a condensation coil external to the CMCP contact module,
wherein the space that is not occupied by said capillary operates in parallel as traditional condensation coil.

The invention will be now described by way of illustration but not by way of limitation, with particular reference to the drawings of the enclosed figures, wherein:
- figure 1 shows a typical traditional heat exchanger (exchange coil) wherein the vaporization of the refrigerant or evaporator;
- figure 2 shows an example of contact module according to the present invention, as obtained by partially modifying a traditional evaporation coil;
- figure 3 shows a schematic representation of a CMC module according to the invention;
- figure 4 shows a further schematic representation of a CMC module according to the invention;
- figure 5 shows a different embodiment of the CMC module according to the invention;
- figure 6 shows an integrated plant of dehumidification/conditioning of air according to the prior art (patent application No. RM2009A000672 with title "Integrated plant of conditioning and dehumidification of air" filed by Università di Genova on December 21, 2009);
- figure 7 shows an integrated plant with two CMC (dehumidifier and regenerator) according to the invention, this plant is suitable to air dehumidification mostly;
- figure 8 shows a different embodiment o fan integrated plant with two CMC (dehumidification and regenerator) according to the invention;
- figure 9 shows on the psycrometric diagram (Ashrae diagram) how the air transformations within the system of figures 6,7 occur.

The present invention provides the construction of innovative components of mass and thermal Exchange here called "Combined microporous hydrophobic membrane contactors" (CMC) and "Only partially combined microporous hydrophobic membrane contactors" (CMCP) which combine in an only object components that were not combined in the prior art, to the end of highly simplify the known hybrid plants, some of which are described in the above-mentioned patent application RM2009A000672. Such membranes, thanks to their hydrophobic nature and the dimension of the pores (some tenths of micrometer), are permeable to air and vapor but not to water and aqueous solutions, what allows their use in the air conditioning plant.

In the following, structures of integrated plants using advantageously the present invention are illustrated as well.

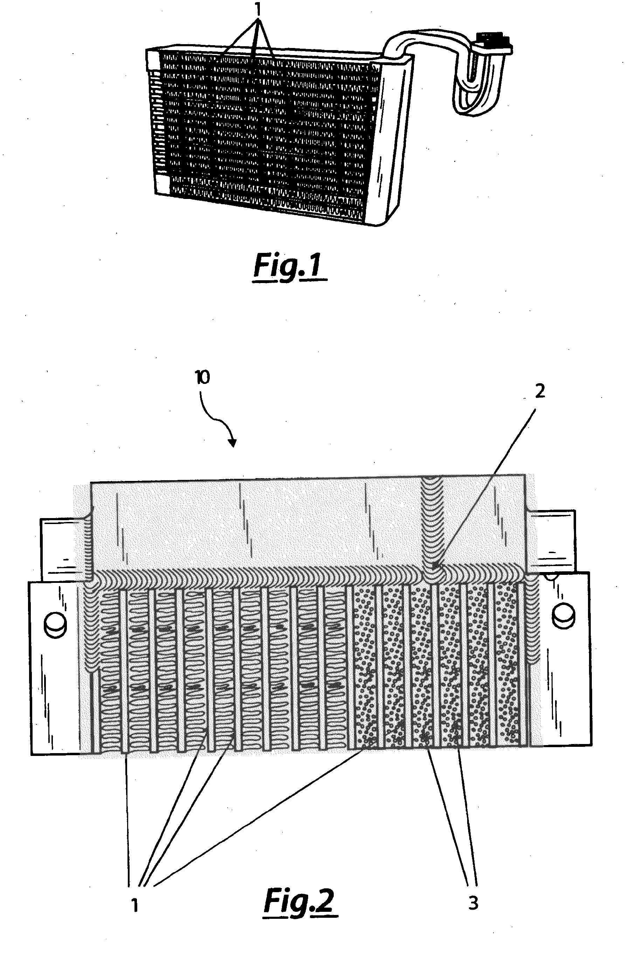

In figure 1 the photo of a typical commercial evaporator is reproduced. The conduits 1 (horizontal in the arrangement of the photo) within which the refrigerant evaporates are well recognizable in figure 1. On these conduits 1 sheet undulations (finning) are welded so as to increase the surface of thermal exchange with air that flows perpendicularly.

According to the invention, membrane capillaries 3 are inserted in place of the sheet finning till a partial or almost complete filling of free spaces between the conduits 1 of the refrigerant (fig. 2). In order to realize the CMC or CMCP, the invention provides to insert a suitable number (some thousands) of capillaries of a hydrophobic microporous membrane (illustrative but not limitative diameter: 0.8-3 mm), for example in polypropylene or other hydrophobic microporous material, for the air flux in commercial evaporation/condensation coils.

A suitable hardening resin is poured on the two opposite faces of the component to incorporate the end parts of the capillaries and seal the space between the thus created capillaries. The desiccant solution wholly fills this internal space lapping the external surface without being able to permeate their internal opening for the hydrophobic nature of the microporous material membrane constituting the capillaries walls. The two opposite resin faces are subjected to cutting mechanical operations to the end of opening the internal opening of the capillaries, making possible the passage of the air to be dehumidified and/or cooled.

Figure 2 shows, by way of illustration, the photo of a commercial evaporator transformed into a CMCP wherein the finning has been partially removed in order to be able to insert sad capillary membranes (diameter of around 2 mm), according to the invention.

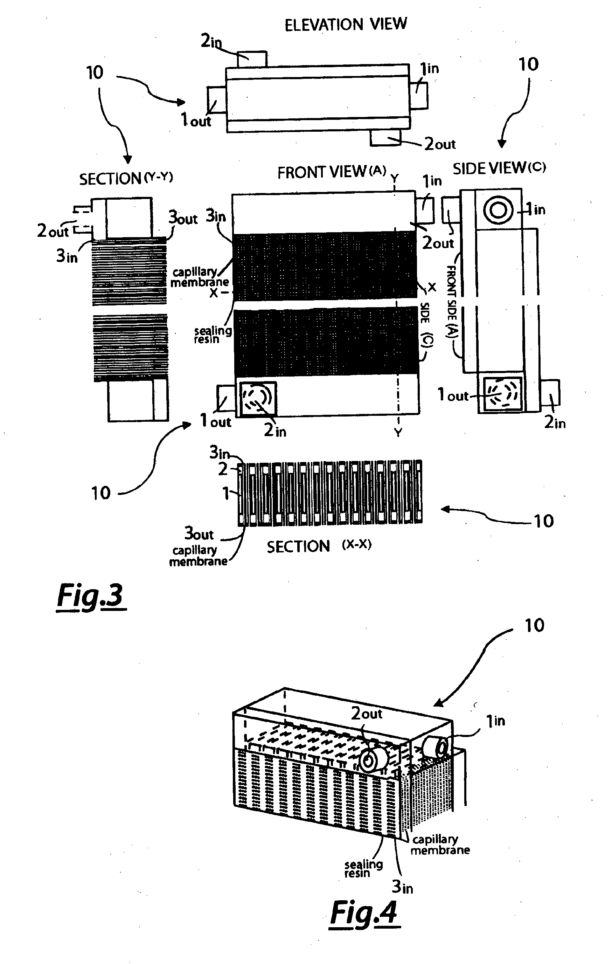

In the resin layer of the upper and lower parts of the device that is being described, suitable collectors are made to allow solution exchanges between the CMC/CMCP for dehumidification and the CMC/CMCP for regeneration of the plant (fig. 3).

Always according to the invention, the liquid desiccant to be used will have to be compatible with the metals normally utilized for the realization of these components of thermal exchange (in general aluminum).

The desiccant identified for a preferred use according to the present invention is a HCOOK (potassium formate) solution that is already today utilized as thermo-vector fluid in refrigeration, because it is much more compatible with many metallic materials with respect to the aqueous solutions of LiCl, CaCl₂. The use of solutions of HCOOK contacting the aluminum is, nowadays, made possible by special additives anti-corrosion known in literature. Besides, such desiccant presents suitable thermophysical and thermo-dynamical properties, low cost and results not to have contraindications concerning ecologic and hygienic aspects.

Concerning the use of the present invention in the integrated plants described in the above-mentioned patent application RM2009A000672, it is here to precise that those plants made reference to hydrophobic membrane contactors to effect the dehumidification of air, whilst the regeneration of the desiccant was effected by membrane distillation techniques. The new CMC component according to the invention as substitute of the dehumidification circuit can be coupled to several re generation circuits, for example circuits using the membrane distillation processes described in the former patent application, or another CMC module (in this case functioning as regenerator) can be utilized, inverting the sign of the thermal and mass exchanges and utilizing the external air to re-concentrate the desiccant.

Making reference to figure 3, one can observe the air pathway 3in,3out inside the openings of the capillary membranes, the pathway of the desiccant solution 2in,2out flowing with contact of the external surface of the capillaries and, finally, that of the coolant fluid 1in,1out flowing inside the evaporation conduits of the CMC.

Making reference to figure 4, two prospective representations of the upper part of the CMC are shown. From the representation on the lower part one sees better the disposition of the fibers inside the CMC (the disposition is by way of illustration limited o only a part of the fibers).

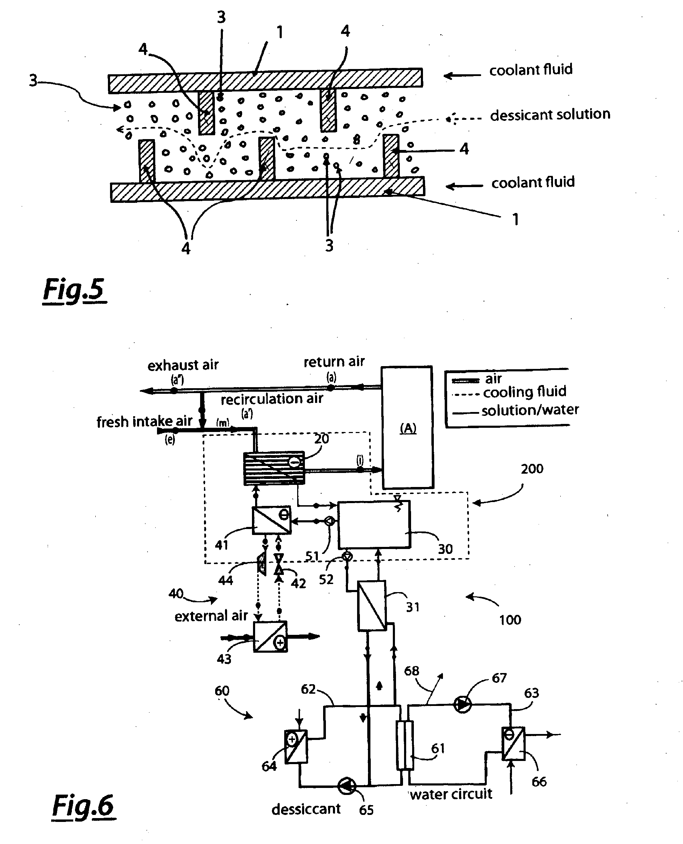

Making reference to figure 5, between the facing sides of the conduits 1, fins 4 are interposed that do not extend in such extent to form a bridge between conducts, but leave sufficient space for the passage of the desiccant solution. Their disposition is preferably alternated on one and the other one of the facing sides, so as o create an undulated pathway for the desiccant solution (the alternation of the fins can be realized in several ways, alternating for example an only fin or two subsequent fins or with another mixed pattern). In such a way, one avoids that the thermal Exchange between the desiccant and the conduits wall and the thermal and mass exchange between the desiccant and the external surface of the capillary pipes 3 can be limited by preferential pathways of the desiccant solution.

Making reference o figure 6, one illustrates the integrated plant 100 of dehumidification/conditioning of air as described in the patent application RM2009A000672. Such plant allows the control of the internal climatic conditions of a confined interior A, such as a civil/industrial interior or an interior compartment of moving means such as cars, etc.

The air in the thermodynamic state (m), as results from the mixing of the fresh air (e) and recirculation air (a'), is cooled down and dehumidified by means of the integrated plant 100 till the conditions of introduction (i) in the conditioned interior A are fulfilled.

The plant 100 comprises a conditioning/dehumidification unit 20 that provides the cooling and dehumidification of the fresh air (e) and recirculation air (a'), and a reservoir 30 connected to it for the recollection of the desiccant solution.

The plant 100 further comprises refrigerating means 40, provided with an evaporator 41, a lamination valve 42, a condenser 43 and a compressor 44. Such evaporator 41 is connected to said reservoir 30 by means of a first pump 51.

The plant 100 comprises also an economizer 31 connected by a pair of supply and return conduits wherein the circulation is determined by a second pump 52. Said economizer 31 can also be connected to a ring between the reservoir 30 and the evaporator 41. To said economizer 31, moreover, re generation means 60 are connected which comprise a membrane distillator 61, disposed between the desiccant regeneration circuit 62 and the distilled water circulation circuit 63.

The re generation means 60 are suitable to re-concentrate said desiccant solution that has been diluted and coming from said conditioning/dehumidification unit 20, extracting from it water by utilizing thermal energy obtained from a thermal source, the thus re-concentrated solution being finally returned in said reservoir 30.

Said membrane distillator module 61 is of the liquid-liquid type, for example of the type DCMD ("*Direct Contact Membrane Distillation*") or even of the air-gap AGMD type (*Air-Gap Membrane Distillation*).

Advantageously, as described in the first patent application RM2009A000672, the regeneration section can be simplified by using a membrane distillator of the air-gap type (AGMD - *Air-Gap Membrane Distillation*) with heat recovery.

As for the functioning of the plant, it is here referred to the description of the patent application RM2009A000672.

As can be observed, in the dehumidification circuit of the just described plant the following components disposed in series were provided: desiccant reservoir, circulation pump, refrigerator evaporator, membrane contactor, the assembly of these elements having been indicated by reference 200 in figure 6.

According to the present invention, this whole circuit 200 (dehumidification) can be substituted by the only CMC component that treats the air to be introduced in the ambient and that is connected by supply and return conduits to the regeneration section.

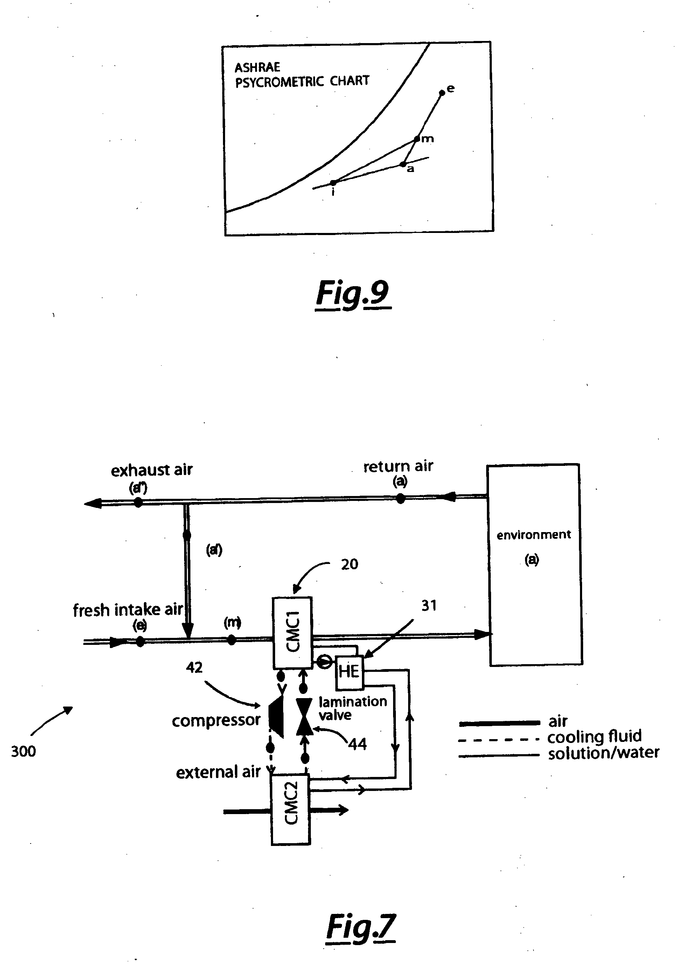

A sensor, sensible to the concentration of the solution or more simply to the pressure of the solution contained in the dehumidification CMC, allows to activate, when necessary, the exchange of solution with the regeneration system. This, as already recalled, can be realized both by membrane distillation processes and exploiting the innovative simplification potentials of the present invention, i.e. by realizing the solution exchange with a second regeneration CMC (cf. figure 7), using the condensation heat of the refrigeration cycle. Also the regeneration system can indie be substituted with a CMC that will be operated in this case as a regenerator.

In this case, the mass and thermal exchanges occur in the inverse direction and the absorbed water is discharged in the external air flow crossing the regeneration CMC. Advantageously according to the invention, as represented in figure 7, between the two CMC a heat exchanger (HE economizer) can be disposed. The solution exchange through said conduits can be realized by natural convention because of the different temperatures of the solution present in the dehumidification CMC (CMC1) and in the regeneration CMC (CMC2), or the desiccant solution can be moved by a pump controller by the mentioned sensor. This plant is particularly suited for the dehumidification of air.

In all cases, in the solution circuit a suitable expansion vessel/reservoir will have to be inserted (not shown in figure).

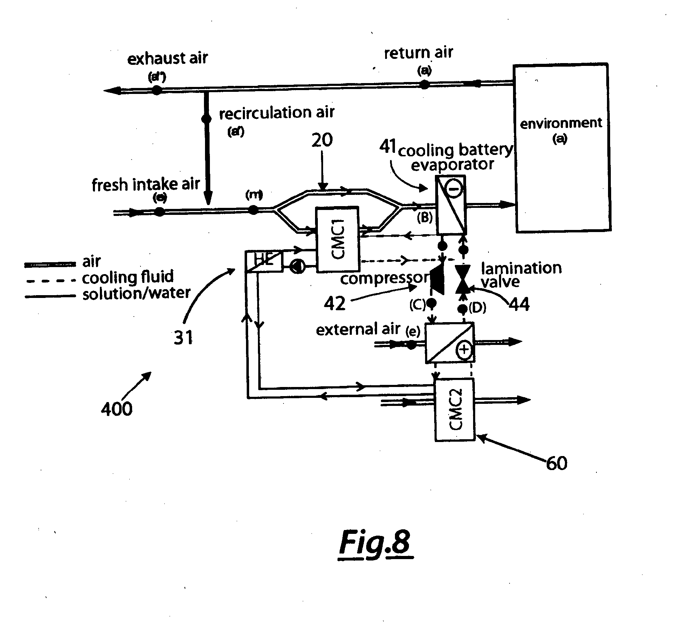

In case it is needed to realize, besides the air dehumidification, its sensible cooling as well, it is proper to make reference to the plant structure illustrated in figure 8. This structure combines the high efficiency of the CMC components in the realization latent exchanges with the sensible exchange high efficiency allowed by the traditional thermal exchange coils.

As can be observed in figure 8, the CMC1 component dehumidifies a portion of the recirculation air flow that is therefore mixed up with the remaining part. The dehumidified mixture that therefore does not contain the relevant latent load is then cooled down by a traditional exchange coil fed with a portion of the refrigerant flow rate of the refrigeration cycle. It is here observed that the fluid evaporation temperature is the same in the CMC1 and in the cooling coil. In a similar way the CMC2 component operates in parallel with a traditional condensation coil (even in this case the condensation temperature is identical in the two components). Obviously the condensation of the coolant fluid, instead of occurring in two parallel separated components (CMC and condensation coil), can occur in an only CMCP component.

The solution exchange between CMC1 and CMC2 to the end of regenerating the solution is effected through the conduits illustrated in figure 8. It is observed that the solution movement can be realized by natural convention because of the density solutions as present in CMC1 (more diluted) and CMC2 (more concentrated). Alternatively, the solution can be moved by a pump controller by a proper sensor. The plant, now described in an illustrative way, can realize power savings for the refrigeration compressor of the order of 40-50 % with respect to the plants of the traditional type. The saving is connected to the possibility of realizing differences between the condensation and evaporation temperatures lower than those obtained with a traditional plant.

The technical advantages of the solution according to the present invention are, among others:
- the CMC component allows a high simplification of the plants integrating a refrigeration cycle with liquid desiccants;
- the CMC component allows the further improvement of the energetic efficiency of these plants (remarkable increasing of the COP as obtained tank to the increase of the evaporation temperature and reduction of the condensation temperature of the refrigeration cycle, reduction of amount/elimination of the circulators, improving of the efficiency of the thermal exchange);
- the fabrication of the CMC component results quite simple starting from components already on the market;
- possibility to realize very compact plants;
- possibility to obtain mechanical/electric Energy savings with respect to the traditional vapor compression plants (up to the 40-50% in the summer conditions) by using the condensation heat of the refrigerator.

Moreover, in the intermediate seasons, the dehumidification of air can be privileged with respect to cooling (by adopting higher evaporation temperatures). In the case of plant structure illustrated in figure 8, it is sufficient not to supply the cooling coil to reduce the refrigerant flow rate into the compressor to the only end of maintaining a constant temperature and concentration of the absorbent solution of the CMC1. In the intermediate seasons it is thus possible to dehumidify the air without the need of cooling it below the dew temperature (traditional dehumidification), providing then further energy savings with respect to the traditional case.

The type of plant could offer important commercial advantages both in the civil sector and in that of the transport means. By way of example, one can observe that in the modern cars the power need for the air conditioning represents now a very important fraction of the fuel consumption as a consequence of the progresses obtained in the engine efficiencies and the increase of the glass surfaces (higher solar loads) that characterize the today's cars. For example, by way of indication, a car with a maximum power of 70-80 kW can absorb for the summer conditioning a mechanical power equal to around 4-5 kW. Such need has a significant percentage relevance if one considers that, in the normal conditions of use, the power supplied by the engine is much lower (around 18 kW). One can further observe that in the intermediate seasons or in the rainy days, in order to avoid problems of glass's steaming up, one often requires only the dehumidification of air and not its concurrent cooling.

The present invention consists mainly in the structure of the CMC that allows to concentrate in an only component (CMC contactor) the whole dehumidification circuit that is constituted by: membrane contactor + (refrigerator evaporator) + reservoir + dehumidification circuit + circulator.

The plant regeneration system can refer to processes of membrane distillation as in the former patent application or can make use of another CMC module (in this case with re generation function) by inverting the sign of the thermal and mass exchanges and using external air to re-concentrate the desiccant.

Other important aspects of the invention re the high simplification of the plants referred to in the former patent application of the same Applicant. The obtainable simplification entails definite advantages in the compactness, further improving the energetic efficiency and reducing/avoiding the utilization of the circulation pumps. This aspect is of particular importance for the application to the conditioning/dehumidification of the air on motor vehicles and transport means. A further aspect that is believed very interesting, owing to the fact that it can make closer the plant application, is the possibility to utilize thermal exchange components coming from an industrial fabrication (evaporators/condensers, heat exchangers) as basis for the realization of CMC components.

The invention concerns the wide sector of the air treatment (conditioning of civil and industrial interiors, air-conditioning of transport means, hygrometric control of confined interiors, refrigeration domain, etc.).

In the domain of air treatment, the invention can have further applications: for example, the reduction of the hoar-frosting phenomena on the coils for air cooling in the sector of preservation of victuals (for example refrigeration stocks, refrigerated transports).

In the description and claims the term "capillary pipe" has been used. Such an expression must be understood not only in the sense of a conduit with circular cross-section, but also in the sense of a conduit with cross-section having any form, for example a square form. Besides, the cross-sections of different pipes can possibly differ with each other, though it is preferable, from the production point of view, that this does not happen.

Moreover, when the pipe cross-section is not circular, i.e. when the pipe is not self-supporting, it is provided with internal supports suitable to contrast the external pressure of the liquid phase, to guarantee the non-deformability of the cross-section.

Finally, it is here to be mentioned a further application of the contact module according to the invention. A contact module fed only with water can advantageously be utilized as evaporative condenser, in place of the traditional condenser of refrigeration plants. In this case, the thermal flow of the refrigeration cycle can be given to the external air at temperatures lower than the traditional ones, realizing significant electric energy savings (better coefficients of performance, COP, of the cycle).

### Bibliography

1. ASHRAE Handbook, Fundamentals, SI Edition, 2005.
2. L. Mei, Y.J. Dai, "A technical review on use of liquid-desiccant dehumidification for air-conditioning application", Renewable & Sustainable Energy Reviews, 12, pp. 662-689, (2008).
3. Lowenstain, S. Slayzak, J. Ryan and A. Pesaran, "Avanced commercial liquid-desiccant technology development study", NREL/TP-550-24688, 1998.
4. Y.K. Yadav, "Vapour-compression and liquid-desiccant hybrid solar space-conditioning system for energy conservation", Renewable Energy, vol. 6, no. 7, pp. 719-723, 1995.
5. M. Conde-Petit, R. Weber, V. Dorer, "Open absorption Systems for Air-Conditioning using Membrane Contactors. 15 Schweizerisches Status-Seminar "Energie-und Umweltforschung in Bauwesen", ETH Zurich, September 2008.
6. C. Isetti, L. Marenco, E. Nannei, "Scambiatori piani a membrana. Risultati sperimentali e numerici nel trattamento dell'aria", Condizionamento dell'Aria Riscaldamento Refrigerazione, no. 9, pp. 52-58, 2005.
7. C. Isetti, E. Nannei, "Energy saving in air conditioning: analysis of a liquid desiccant membrane dehumidification cycle integrated with an endoreversible Carnot heat pump in summer conditions", Proceedings of the Eurotherm Seminar no. 72 "Thermodynamics heat and mass transfer of refrigeration machines and heat pumps", pp. 411-416, Valencia, 2003.
8. C. Isetti, E. Nannei, F. Vestrelli, "Improving energy performance in vehicle air conditioning: analysis of a liquid desiccant membrane dehumidification cycle integrated with a CO2 refrigeration pump", Proceedings of the 1 st European Mobile Air Conditioning Workshop, Torino, 2005.
9. G.A. Longo, A. Gasparella, " Experimental nand theretical abnalysis of heat and mass transfer in a packed column dehumidifier/regenerator with liquid desiccant" Int. J. of Heat and mass Transfer, pp. 5240-5254,48, 2005.
10. M. Wang, S. Mohapatra, J. Mock, "A multi-metal Corrosion Inhibitor for Potassium Formate Solutions" NACE international, Vol. 40, N° 1, 2010.
11. S. Bergero, A. Chiari, "Performance analysis of a liquid desiccant and membrane contactor hybrid air conditioning system", Energy and Buildings, 42, pp 1976-1986, 2010.

The preferred embodiments have been above described and some modifications of this invention have been suggested, but it should be understood that those skilled in the art can make variations and changes, without so departing from the related scope of protection, as defined by the following claims.

## Claims

1. Contact module (10) operating with three fluids, air, coolant fluid and desiccant solution, with hydrophobic tubular membranes for the dehumidification and/or cooling of process air, said contact module comprising a plurality of conduits (1) for the coolant fluid, in particular typically frigorific evaporating fluid, the contact module being **characterized in that**:
- the space between said plurality of conduits (1) is substantially filled with a plurality of capillary pipes (3) in hydrophobic micro-porous membrane, having cross-section of any geometry and being apt to contrast the external pressure of the liquid phase so as to maintain the section's shape, whose opening is suitable to be crossed by air, and whose main extension direction is perpendicular to said plurality of conduits (1);
- on the two opposite surfaces of the contact module at the ends of said plurality of pipes, one or more closing material layers, in particular of hardening resin, are disposed, for incorporating the end parts of said plurality of capillary pipes and sealing the thus created space between said plurality of capillary pipes, said space being suitable to let a desiccant solution pass which laps the external surface of said plurality of capillary pipes without being able to penetrate in their interior owing to the hydrophobic nature of their material, said two opposite surfaces having been subjected to cutting mechanical operations to the end of opening the lumen of said plurality of capillary pipes making thus possible the passage of the air to be dehumidified and/or cooled;
- on the opposite surfaces at the ends of said plurality of conduits (1) respective collectors (2) are arranged for the collection of the coolant fluid and the desiccant solution.

2. Contact module according to claim 1, **characterized in that** said plurality of capillary pipes have a diameter comprised between 0.4 and 6 mm.

3. Contact module according to claim 2, **characterized in that** said diameter is comprised between 0.8 and 3 mm.

4. Contact module according to any claim 1 to 3, **characterized in that**, on the sides of said plurality of conduits (1) facing with each other, a plurality of fins are fixed, which are preferably metallic fins, in substantially perpendicular way with respect to the same sides, said fins extending only partially between said sides of plurality of conduits facing with each other, said fins being fixed in an alternate way on said sides facing with each other.

5. Contact module according to any claim 1 to 4, **characterized in that** only the space between some of said plurality of conduits is used for the insertion of said plurality of capillary pipes whilst the space that is not used to that end is provided with traditional heat exchange fins to increase the thermal exchange with the air, thus operating in this last part as a traditional heat exchanger, in particular evaporation and/or condensation heat exchanger, the contact module being hence a CMCP module.

6. Integrated plant (300, 400) for the dehumidification and conditioning of air, comprising:
- a conditioning and/or dehumidification unit (20) constituted by the contact module according to any claim 1 to 5, for the dehumidification and cooling of the air by means of a desiccant solution,
- cooling means (42, 44), connected to said conditioning and/or dehumidification unit (20), suitable to feed said conditioning and/or dehumidification unit (20) with the coolant fluid,
**characterized in that**:
- said conditioning and/or dehumidification unit (20) is the contact module (10) according to any claim 1 to 5;
- a regeneration unit (60) for the regeneration of said a desiccant solution is comprised, which is connected to the conditioning and/or dehumidification unit (20);
- said regeneration unit (60) is suitable to reconcentrate said desiccant solution that comes from the conditioning and/or dehumidification unit (20) where it has been diluted by contact with humidity, discharging outside water and using for such a reconcentration process the condensation thermal energy of the coolant fluid, or the energy provided by another thermovector fluid, the re-concentrated desiccant solution being finally returned to said conditioning and/or dehumidification unit (20).

7. Integrated plant according to claim 6, **characterized in that** said regeneration unit (60) comprises a liquid/liquid membrane distillator (61) of the type DCMD/AGMD or thermal recovery AGMD.

8. Integrated plant (300) according to claim 6, **characterized in that** said regeneration unit (60) is constituted by a further contact module according to any claim 1 to 5.

9. Integrated plant (400) according to any claim 6 to 8, **characterized in that**, when the contact module is the contact module (10) according to any claim 1 to 4:
- said refrigerating means (42, 44) feed further separate condensation coils (43) and evaporation coils (41) as well.

10. Integrated plant (400) according to any claim 6 to 9, **characterized in that**:
- said conditioning and/or dehumidification unit (20) dehumidifies a part of the air flow which is subsequently collected and mixed up with the non-dehumidified part so as to create an air mixture,
- said air mixture is cooled down with an exchange coil (41) arranged in series on the air pathway, the exchange coil being fed with a part of the flow of coolant fluid coming from said cooling means (42, 44);
- said regeneration unit (60) operates in parallel with a condensing coil (43);
- the exchange of desiccant solution between said conditioning and/or dehumidification unit (20) and said regeneration unit (60), to the end of regenerating the desiccant solution, is effected through suitable conduits.

11. Integrated plant according to claim 10, **characterized in that**:
- the evaporation temperature of the frigorific fluid is the same in said conditioning and/or dehumidification unit (20) and in said separate exchange coil (41);
- the condensation temperature of the frigorific fluid is the same in said regeneration unit (60) and in said separate condensation coil (43).

12. Integrated plant (400) according to any claim 10 or 11, **characterized in that**, when the contact module is the contact module (10) according to claim 5:
- said cooling means (42,44) do not comprise the evaporation coil 41) external to the CMCP contact module (20),
wherein the space that is not occupied by said capillary pipes operates as a traditional refrigerating coil (41) arranged in parallel.

13. Integrated plant (400) according to any claim 10 to 12, **characterized in that**, when the contact module is the contact module (10) according to claim 5:
- said cooling means (42,44) do not comprise a condensation coil
external to the CMCP contact module (60),
wherein the space that is not occupied by said capillary operates in parallel as traditional condensation coil (43).

## Patentansprüche

1. Kontaktmodul (10), das mit drei Fluiden arbeitet, Luft, Kühlfluid und Trocknungsmittellösung, mit hydrophoben, röhrenförmigen Membranen für die Entfeuchtung und/oder Kühlung von Prozessluft, wobei das Kontaktmodul eine Vielzahl von Leitungen (1) für das Kühlfluid aufweist, insbesondere typischerweise kälteerzeugendes Verdampfungsfluid, wobei das Kontaktmodul **dadurch gekennzeichnet ist, dass**:
- der Raum zwischen der Vielzahl von Leitungen (1) im Wesentlichen gefüllt ist mit einer Vielzahl von Kapillarröhren (3) in der hydrophoben, mikroporigen Membran mit einem Querschnitt von irgendeiner Geometrie und geeignet, um sich dem äußeren Druck der flüssigen Phase entgegen zu setzen, um die Form des Schnittes aufrecht zu erhalten, deren Öffnung geeignet ist, um von Luft durchquert zu werden und deren Haupterstreckungsrichtung rechtwinklig zu der Vielzahl von Leitungen (1) ist,
- an den beiden gegenüberliegenden Oberflächen des Kontaktmoduls an den Enden der Vielzahl von Röhren eine oder mehrere abschließende Materialschichten, insbesondere von ausgehärtetem Harz, angeordnet sind, um die Endteile der Vielzahl von Kapillarröhren einzuschließen und den so erzeugten Raum zwischen der Vielzahl von Kapillarröhren zu versiegeln, wobei der Raum geeignet ist, um eine Trocknungsmittellösung passieren zu lassen, welche die äußere Oberfläche der Vielzahl von Kapillarröhren umgibt ohne in der Lage zu sein, in deren Inneres einzudringen aufgrund der hydrophoben Natur ihres Materials, wobei die beiden gegenüberliegenden Oberflächen mechanischen Schneidoperationen unterworfen wurden am Ende einer Öffnung des Lumens der Vielzahl von Kapillarröhren, was das Durchtreten der zu entfeuchtenden und/oder zu kühlenden Luft möglich macht,
- auf den gegenüberliegenden Oberflächen an den Enden der Vielzahl von Leitungen (1) jeweilige Kollektoren (2) angeordnet sind für die Sammlung des Kühlfluides und der Trocknungsmittellösung.

2. Kontaktmodul gemäß Anspruch 1, **dadurch gekennzeichnet, dass** die Vielzahl von Kapillarröhren einen Durchmesser aufweist zwischen 0,4 und 6 mm.

3. Kontaktmodul gemäß Anspruch 2, **dadurch gekennzeichnet, dass** der Durchmesser zwischen 0,8 und 3 mm liegt.

4. Kontaktmodul gemäß einem der Ansprüche 1 bis 3, **dadurch gekennzeichnet, dass** auf den einander zugewandten Seiten der Vielzahl von Leitungen (1) eine Vielzahl von Lamellen befestigt ist, die vorzugsweise Metalllamellen sind, in einer im Wesentlichen rechtwinkligen Weise in Bezug auf dieselben Seiten, wobei sich die Lamellen nur teilweise zwischen den einander zugewandten Seiten der Vielzahl von Leitungen erstrecken, wobei die Lamellen in einer alternativen Weise an den einander zugewandten Seiten befestigt sind.

5. Kontaktmodul gemäß einem der Ansprüche 1 bis 4, **dadurch gekennzeichnet, dass** nur der Raum zwischen einigen der Vielzahl von Leitungen verwendet wird zum Einsetzen der Vielzahl von Kapillarröhren, während der nicht verwendete Raum an diesem Ende versehen ist mit herkömmlichen Wärmeaustauschlamellen, um den Wärmeaustausch mit der Luft zu erhöhen, sodass es teilweise wie ein herkömmlicher Wärmetauscher arbeitet, insbesondere wie ein Verdampfungs- und/oder Kondensationswärmetauscher, wobei das Kontaktmodul somit ein CMCP-Modul ist.

6. Integrierte Anlage (300, 400) für die Entfeuchtung und Klimatisierung von Luft umfassend:
- eine Klimatisierungs- und/oder Entfeuchtungseinheit (20), die aus dem Kontaktmodul gemäß einem der Ansprüche 1 bis 5 besteht zur Entfeuchtung und Kühlung der Luft mittels einer Trocknungsmittellösung,
- einer Kühleinrichtung (42, 44), die mit der Klimatisierungs- und/oder Entfeuchtungseinheit (20) verbunden und geeignet ist, um die Klimatisierungs- und/oder Entfeuchtungseinheit (20) mit dem Kühlfluid zu speisen,
**dadurch gekennzeichnet, dass**:
- die Klimatisierungs- und/oder Entfeuchtungseinheit (20) das Kontaktmodul (10) gemäß einem der Ansprüche 1 bis 5 ist,
- eine Regenerationseinheit (60) vorhanden ist für die Regeneration der Trocknungsmittellösung, die mit der Klimatisierungs- und/oder Entfeuchtungseinheit (20) verbunden ist,
- die Regenerationseinheit (60) geeignet ist, um die Trocknungsmittellösung wieder zu konzentrieren, die von der Klimatisierungs- und/oder Entfeuchtungseinheit (20) kommt, wo sie durch einen Kontakt mit Feuchtigkeit verdünnt wurde, um Umgebungswasser abzugeben und für einen solchen Wiederaufkonzentrierungsprozess die thermische Kondensationsenergie des Kühlfluides oder die von einem anderen Thermovektorfluid bereitgestellte Energie zu verwenden, wobei die wiederaufkonzentrierte Trocknungsmittellösung schließlich zu der Klimatisierungs- und/oder Entfeuchtungseinheit (20) zurückgeführt wird.

7. Integrierte Anlage gemäß Anspruch 6, **dadurch gekennzeichnet, dass** die Regenerationseinheit (60) ein Flüssig/Flüssig-Membran-Destillationsgerät (61) des Typs DCMD/AGMD oder der thermischen Rückgewinnung AGMD aufweist.

8. Integrierte Anlage (300) gemäß Anspruch 6, **dadurch gekennzeichnet, dass** die Regenerationseinheit (60) aus einem weiteren Kontaktmodul gemäß einem der Ansprüche 1 bis 5 besteht.

9. Integrierte Anlage (400) gemäß einem der Ansprüche 6 bis 8, **dadurch gekennzeichnet, dass** sofern das Kontaktmodul das Kontaktmodul (10) gemäß einem der Ansprüche 1 bis 4 ist:
- die Kühleinrichtung (42, 44) weiterhin getrennte Kondensationsspiralen (43) und auch Verdampfungsspiralen (41) speist.

10. Integrierte Anlage (400) gemäß einem der Ansprüche 6 bis 9, **dadurch gekennzeichnet, dass**:
- die Klimatisierungs- und/oder Entfeuchtungseinheit (20) einen Teil der Luftströmung entfeuchtet, die anschließend gesammelt und mit dem nichtentfeuchteten Teil gemischt wird, um eine Luftmischung zu erzeugen,
- die Luftmischung herabgekühlt wird mit einer Austauschspirale (41), die in Reihe mit dem Luftweg angeordnet ist, wobei die Austauschspirale gespeist wird mit einem Teil der Strömung des Kühlfluides, das von der Kühlreinrichtung (42, 44) kommt,
- die Regenerationseinheit (60) parallel zu einer Kondensationsspirale (43) arbeitet,
- der Austausch von Trocknungsmittellösung zwischen der Klimatisierungs- und/oder Entfeuchtungseinheit (20) und der Regenerationseinheit (60) zum Ende der Regeneration der Trocknungsmittellösung bewirkt wird durch geeignete Leitungen.

11. Integrierte Anlage gemäß Anspruch 10, **dadurch gekennzeichnet, dass**
- die Verdampfungstemperatur des kälteerzeugenden Fluides die gleiche ist in der Klimatisierungs- und/oder Entfeuchtungseinheit (20) und in den getrennten Austauschspiralen (41),
- die Kondensationstemperatur des kälteerzeugenden Fluides die gleiche ist in der Regenerationseinheit (60) und in den verschiedenen Kondensationsspiralen (43).

12. Integrierte Anlage (400) gemäß einem der Ansprüche 10 oder 11, **dadurch gekennzeichnet, dass** wenn das Kontaktmodul das Kontaktmodul (10) gemäß Anspruch 5 ist:
- die Kühleinrichtung (42, 44) außerhalb des CMCP-Kontaktmoduls (20) nicht die Verdampfungsspirale (41) aufweist,
wobei der Raum, der nicht von den Kapillarröhren belegt ist als herkömmliche Kühlspirale (41) arbeitet, die parallel angeordnet ist.

13. Integrierte Anlage (400) gemäß einem der Ansprüche 10 bis 12, **dadurch gekennzeichnet, dass**, wenn das Kontaktmodul das Kontaktmodul (10) gemäß Anspruch 5 ist:
- die Kühleinrichtung (42, 44) außerhalb des CMCP-Kontaktmoduls (60) keine Kondensationsspirale aufweist,
wobei der Raum, der nicht von den Kapillaren belegt ist, parallel als herkömmliche Kondensationsspirale (43) arbeitet.

## Revendications

1. Module de contact (10) fonctionnant avec trois fluides: de l'air, un fluide de refroidissement et une solution desséchante, ayant des membranes tubulaires hydrophobes pour la déshumidification et/ou le refroidissement de l'air de traitement, ledit module de contact comprenant une pluralité de conduits (1) pour le fluide de refroidissement, en particulier, typiquement un fluide d'évaporation frigorifique, le module de contact étant **caractérisé en ce que**:
- l'espace entre ladite pluralité de conduits (1) est substantiellement rempli d'une pluralité de tubes capillaires (3) dans une membrane microporeuse hydrophobe, ayant une section transversale d'une géométrie quelconque et étant capable de s'opposer à la pression externe de la phase liquide de façon à maintenir la forme de la section, dont l'ouverture est adaptée pour être traversée par l'air et dont la direction d'extension principale est perpendiculaire à ladite pluralité de conduits (1);
- sur les deux faces opposées du module de contact aux extrémités de ladite pluralité de tubes, une ou plusieurs couches de matériau de fermeture, en particulier, en résine durcissante, sont disposées pour incorporer les parties d'extrémité de ladite pluralité de tubes capillaires et sceller l'espace ainsi créé entre ladite pluralité de tubes capillaires, ledit espace étant adapté pour laisser passer une solution desséchante qui recouvre la surface externe de ladite pluralité de tubes capillaires sans pouvoir pénétrer à l'intérieur à cause de la nature hydrophobe de leur matériau, lesdites deux faces opposées ayant été soumises à des opérations mécaniques de coupe à l'extrémité de l'ouverture de la lumière de ladite pluralité de tubes capillaires, rendant ainsi possible le passage de l'air à déshumidifier et/ou à refroidir;
- sur les faces opposées aux extrémités de ladite pluralité de conduits (1), des collecteurs (2) respectifs sont disposés pour la collecte du fluide de refroidissement et de la solution desséchante.

2. Module de contact selon la revendication 1, **caractérisé en ce que** ladite pluralité de tubes capillaires ont un diamètre compris entre 0,4 et 6 mm.

3. Module de contact selon la revendication 2, **caractérisé en ce que** ledit diamètre est compris entre 0,8 et 3 mm.

4. Module de contact selon l'une quelconque des revendications 1 à 3, **caractérisé en ce que**, sur les côtés de ladite pluralité de conduits (1) se faisant face, une pluralité d'ailettes sont fixées, qui sont de préférence des ailettes métalliques, de manière sensiblement perpendiculaire aux mêmes côtés; lesdites ailettes ne s'étendant que partiellement entre lesdits côtés de la pluralité de conduits se faisant face, lesdites ailettes étant fixées d'une manière alternée sur lesdits côtés se faisant face.

5. Module de contact selon l'une quelconque des revendications 1 à 4, **caractérisé en ce que** seul l'espace entre quelques-uns de ladite pluralité de conduits est utilisé pour l'insertion de ladite pluralité de tubes capillaires alors que l'espace non utilisé à cette fin est pourvu d'ailettes d'échange de chaleur traditionnelles pour augmenter l'échange thermique avec l'air, fonctionnant ainsi dans cette dernière partie comme un échangeur de chaleur traditionnel, en particulier un échangeur de chaleur par évaporation et/ou condensation, le module de contact étant par conséquent un module CMCP.

6. Installation intégrée (300, 400) pour la déshumidification et la climatisation, comprenant:
- une unité de climatisation et/ou de déshumidification (20) constituée du module de contact selon l'une quelconque des revendications 1 à 5, pour la déshumidification et le refroidissement de l'air au moyen d'une solution desséchante,
- des moyens de refroidissement (42, 44), connectés à ladite unité de climatisation et/ou de déshumidification (20), appropriés pour alimenter ladite unité de climatisation et/ou de déshumidification (20) en fluide de refroidissement,
**caractérisée en ce que**:
- ladite unité de climatisation et/ou de déshumidification (20) est constituée du module de contact (10) selon l'une quelconque des revendications 1 à 5;
- une unité de régénération (60) destinée à la régénération de ladite solution desséchante est comprise, laquelle est connectée à l'unité de climatisation et/ou de déshumidification (20);
- ladite unité de régénération (60) est adaptée pour reconcentrer ladite solution desséchante qui provient de l'unité de climatisation et/ou de déshumidification (20) où elle a été diluée au contact de l'humidité, évacuant l'eau à l'extérieur et utilisant pour un tel processus de reconcentration l'énergie thermique de condensation du fluide de refroidissement, ou l'énergie fournie par un autre fluide thermovecteur, la solution desséchante reconcentrée étant finalement renvoyée vers ladite unité de climatisation et/ou de déshumidification (20).

7. Installation intégrée selon la revendication 6, **caractérisée en ce que** ladite unité de régénération (60) comprend un distillateur membranaire liquide/liquide (61) du type DCMD/AGMD ou AGMD à récupération thermique.

8. Installation intégrée (300) selon la revendication 6, **caractérisée en ce que** ladite unité de régénération (60) est constituée d'un module de contact supplémentaire selon l'une quelconque des revendications 1 à 5.

9. Installation intégrée (400) selon l'une quelconque des revendications 6 à 8, **caractérisée en ce que**, lorsque le module de contact est le module de contact (10) selon l'une quelconque des revendications 1 à 4:
- lesdits moyens réfrigérants (42, 44) alimentent des serpentins de condensation séparés (43) supplémentaires et également des serpentins d'évaporation (41).

10. Installation intégrée (400) selon l'une quelconque des revendications 6 à 9, **caractérisée en ce que**:
- ladite unité de climatisation et/ou de déshumidification (20) déshumidifie une partie du flux d'air qui est ensuite recueilli et mélangé à la partie non déshumidifiée de manière à créer un mélange d'air,
- ledit mélange d'air est refroidi à l'aide d'un serpentin d'échange (41) disposé en série sur le circuit d'air, le serpentin d'échange étant alimenté avec une partie du flux de fluide de refroidissement provenant desdits moyens de refroidissement (42, 44);
- ladite unité de régénération (60) fonctionne en parallèle avec un serpentin de condensation (43);
- l'échange de solution desséchante entre ladite unité de climatisation et/ou de déshumidification (20) et ladite unité de régénération (60), jusqu'à la fin de la régénération de la solution desséchante, s'effectue par l'intermédiaire de conduits appropriés.

11. Installation intégrée selon la revendication 10, **caractérisée en ce que**:
- la température d'évaporation du fluide frigorifique est la même dans ladite unité de climatisation et/ou de déshumidification (20) et dans ledit serpentin d'échange séparé (41);
- la température de condensation du fluide frigorifique est la même dans ladite unité de régénération (60) et dans ledit serpentin de condensation séparé (43).

12. Installation intégrée (400) selon l'une quelconque des revendications 10 et 11, **caractérisée en ce que**, lorsque le module de contact est le module de contact (10) selon la revendication 5:
- lesdits moyens de refroidissement (42, 44) ne comportent pas le serpentin d'évaporation (41) externe au module de contact CMCP (20),
où l'espace qui n'est pas occupé par lesdits tubes capillaires fonctionne comme un serpentin réfrigérant traditionnel (41) disposé en parallèle.

13. Installation intégrée (400) selon l'une quelconque des revendications 10 à 12, **caractérisée en ce que**, lorsque le module de contact est le module de contact (10) selon la revendication 5:
- lesdits moyens de refroidissement (42, 44) ne comportent pas de serpentin de condensation externe au module de contact CMCP (60),
où l'espace qui n'est pas occupé par ledit capillaire fonctionne en parallèle comme un serpentin de condensation traditionnel (43).
